(19) Europäisches Patentamt
European Patent Office
Office européen des brevets

(11) **EP 3 051 813 A1**

(12) **EUROPEAN PATENT APPLICATION**

(43) Date of publication:
**03.08.2016 Bulletin 2016/31**

(51) Int Cl.:
***H04N 13/00*** (2006.01)          ***H04N 21/2362*** (2011.01)

(21) Application number: **15193660.6**

(22) Date of filing: **09.11.2015**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA MD**<br><br>(30) Priority: **27.01.2015 KR 20150012898**<br><br>(71) Applicant: **Electronics and Telecommunications<br>Research Institute<br>Daejeon 305-700 (KR)** | (72) Inventors:<br>• **LEE, Joo Young**<br>  **302-748 Daejeon (KR)**<br>• **KIM, Sung Hoon**<br>  **302-726 Daejeon (KR)**<br>• **CHOI, Jin Soo**<br>  **305-750 Daejeon (KR)**<br>• **KIM, Jin Woong**<br>  **305-365 Daejeon (KR)**<br><br>(74) Representative: **Betten & Resch<br>Patent- und Rechtsanwälte PartGmbB<br>Maximiliansplatz 14<br>80333 München (DE)** |

(54) **THREE-DIMENSIONAL (3D) BROADCAST SERVICE PROVIDING METHOD AND 3D BROADCAST PROVIDING APPARATUS PERFORMING THE SAME**

(57)    A three-dimensional (3D) broadcast service providing method and a 3D broadcast providing apparatus performing the method are disclosed. The 3D broadcast service providing method may i) add 3D service information to a program map table (PMT) of either of a 2D broadcast service of a main view and a 2D broadcast service of an additional view or ii) add the 3D service information to a PMT of a 3D broadcast service distinguished from the 2D broadcast service of the main view and the 2D broadcast service of the additional view and transmit the 3D service information to a 3D broadcast receiving apparatus in order to provide a 3D broadcast service.

**FIG. 2**

**Description**

CROSS-REFERENCE TO RELATED APPLICATION

This application claims the priority benefit of Korean Patent Application No. 10-2015-0012898, filed on January 27, 2015, in the Korean Intellectual Property Office, the disclosure of which is incorporated herein by reference.

BACKGROUND

1. Field of the Invention

Example embodiments of the present invention relate to a three-dimensional (3D) broadcast service providing method performed by a 3D broadcast providing apparatus, and more particularly, to a 3D broadcast service providing method capable of providing a 3D broadcast service by utilizing a two-dimensional (2D) broadcast service of a main view and a 2D broadcast service of an additional view which are present independently.

2. Description of the Related Art

A three-dimensional (3D) broadcast providing apparatus transmits a main view as a left-eye view and an additional view as a right-eye view which constitute binocular 3D content by using transport streams for transmitting views. Here, the main view and the additional view may reversely correspond to the right-eye view and the left-eye view depending on a transport stream, each of which us transmitted through a transport stream.
Further, the 3D broadcast providing apparatus uses either of a frame-compatible mode and a service-compatible mode in transmitting the main view and the additional view. The frame-compatible mode divides one image frame into a main view as a left-eye view and an additional view as a right-eye view. Then, the frame-compatible mode transmits the main view and the additional view through a broadcast network for providing a two-dimensional (2D) broadcast service, thereby securing compatibility between systems related to the broadcast network, while not securing compatibility with a 2D broadcast receiving apparatus.
Meanwhile, the service-compatible mode secures compatibility with a 2D broadcast receiving apparatus. Accordingly, studies for providing a 3D broadcast service through the service-compatible mode are actively conducted in recent years in order to secure compatibility with a 2D broadcast receiving apparatus which provides a 2D broadcast service.
In detail, the service-compatible mode transmits a main view and an additional view which constitute binocular 3D content through different transport streams. That is, in transmitting the main view and the additional view, the service-compatible mode replaces either of the main view and the additional view with a 2D broadcast service for transmission in order to improve transmission efficiency. The service-compatible mode allows either of the main view and the additional view to be used by a 2D broadcast receiving apparatus providing a 2D broadcast service, thereby securing compatibility with the 2D broadcast service providing apparatus.
However, the service-compatible mode replaces one of the main view and the additional view with the 2D broadcast service and transmits the other thereof as a 3D broadcast service, and thus part of a broadcast bandwidth is utilized for the other view. Accordingly, the service-compatible mode has reduced frequency efficiency.
Thus, there is needed a method of providing a 3D broadcast service which optimizes frequency efficiency based on the service-compatible mode.

SUMMARY

An aspect of the present invention provides a three-dimensional (3D) broadcast service providing method which utilizes two-dimensional (2D) broadcast services independently present as a main view and an additional view in order to provide a 3D broadcast service.
According to an aspect of the present invention, there is provided a method of providing a 3D broadcast service performed by a 3D broadcast providing apparatus, the method including adding 3D service information to a program map table (PMT) of either of a 2D broadcast service of a main view and a 2D broadcast service of an additional view, and transmitting the 2D broadcast service of the main view, the 2D broadcast service of the additional view, and the PMT to a 3D broadcast receiving apparatus.
The 3D service information may include identification (ID) information on the 2D broadcast service of the additional view when the 3D service information is added to a PMT of the 2D broadcast service of the main view, and the 3D service information may include ID information on the 2D broadcast service of the main view when the 3D service information is added to a PMT of the 2D broadcast service of the additional view.

The ID information may include at least one of a transport stream ID of the additional view, a network ID of the additional view, and a service ID of the additional view when the 3D service information is added to the PMT of the 2D broadcast service of the main view, and the ID information may include at least one of a transport stream ID of the main view, a network ID of the main view, and a service ID of the main view when the 3D service information is added to the PMT of the 2D broadcast service of the additional view.

The 3D service information may include at least one of a service type provided to the 3D broadcast receiving apparatus, a flag for distinguishing right and left arrangements of the main view and the additional view, and information on synchronization between the main view and the additional view.

The 2D broadcast service of the main view and the 2D broadcast service of the additional view may be included in the same transport stream or different transport streams.

According to another aspect of the present invention, there is also provided a method of providing a 3D broadcast service performed by a 3D broadcast providing apparatus, the method including adding 3D service information to a PMT of a 3D broadcast service distinguished from a 2D broadcast service of a main view and a 2D broadcast service of an additional view, and transmitting the 2D broadcast service of the main view, the 2D broadcast service of the additional view, the 3D broadcast service, and the PMT to a 3D broadcast receiving apparatus, wherein the 3D broadcast service shares a video or audio with either of the 2D broadcast service of the main view and the 2D broadcast service of the additional view.

The 3D service information may include ID information on the 2D broadcast service of the additional view when the 3D broadcast service shares a video or audio of the 2D broadcast service of the main view, and the 3D service information may include ID information on the 2D broadcast service of the main view when the 3D broadcast service shares a video or audio of the 2D broadcast service of the additional view.

The ID information may include at least one of a transport stream ID of the additional view, a network ID of the additional view, and a service ID of the additional view when the 3D broadcast service shares the video or audio of the 2D broadcast service of the main view, and the ID information may include at least one of a transport stream ID of the main view, a network ID of the main view, and a service ID of the main view when the 3D broadcast service shares the video or audio of the 2D broadcast service of the additional view.

The 3D service information may include at least one of a service type provided to the 3D broadcast receiving apparatus, a flag for distinguishing right and left arrangements of the main view and the additional view, and information on synchronization between the main view and the additional view.

The 2D broadcast service of the main view and the 3D broadcast service may be included in the same transport stream when the 2D broadcast service of the main view shares the video or audio with the 3D broadcast service, and the 2D broadcast service of the additional view and the 3D broadcast service may be included in the same transport stream when the 2D broadcast service of the additional view shares the video or audio with the 3D broadcast service.

According to still another aspect of the present invention, there is also provided a method of providing a 3D broadcast service performed by a 3D broadcast providing apparatus, the method including adding 3D service information to a PMT of a 3D broadcast service distinguished from a 2D broadcast service of a main view and a 2D broadcast service of an additional view, and transmitting the 2D broadcast service of the main view, the 2D broadcast service of the additional view, the 3D broadcast service, and the PMT to a 3D broadcast receiving apparatus, wherein the 3D broadcast service does not share a video or audio with the 2D broadcast service of the main view and the 2D broadcast service of the additional view.

3D service information may include ID information on the 2D broadcast service of the main view including at least one of a transport stream ID of the main view, a network ID of the main view and a service ID of the main view, and ID information on the 2D broadcast service of the additional view including at least one of a transport stream ID of the additional view, a network ID of the additional view and a service ID of the additional view.

3D service information may include at least one of a service type provided to the 3D broadcast receiving apparatus, a flag for distinguishing right and left arrangements of the main view and the additional view, and information on synchronization between the main view and the additional view.

The 2D broadcast service of the main view, the 2D broadcast service of the additional view, and the 3D broadcast service may be included in the same transport stream or different transport streams.

According to yet another aspect of the present invention, there is also provided an apparatus for providing a 3D broadcast, the apparatus including an addition unit to add 3D service information to a PMT of either of a 2D broadcast service of a main view and a 2D broadcast service of an additional view, and a transmission unit to transmit the 2D broadcast service of the main view, the 2D broadcast service of the additional view, and the PMT to a 3D broadcast receiving apparatus.

The 2D broadcast service of the main view and the 2D broadcast service of the additional view may be included in the same transport stream or different transport streams.

According to further another aspect of the present invention, there is also provided an apparatus for providing a 3D broadcast, the apparatus including an addition unit to add 3D service information to a PMT of a 3D broadcast service distinguished from a 2D broadcast service of a main view and a 2D broadcast service of an additional view, and a transmission unit to transmit the 2D broadcast service of the main view, the 2D broadcast service of the additional view, the 3D broadcast service, and the PMT to a 3D broadcast receiving apparatus, wherein the 3D broadcast service shares a video or audio with either of the 2D broadcast service of the main view and the 2D broadcast service of the additional view.

The 2D broadcast service of the main view and the 3D broadcast service may be included in the same transport stream when the 2D broadcast service of the main view shares the video or audio with the 3D broadcast service, and the 2D broadcast service of the additional view and the 3D broadcast service may be included in the same transport stream when the 2D broadcast service of the additional view shares the video or audio with the 3D broadcast service.

According to still another aspect of the present invention, there is also provided an apparatus for providing a 3D broadcast, the apparatus including an addition unit to add 3D service information to a PMT of a 3D broadcast service distinguished from a 2D broadcast service of a main view and a 2D broadcast service of an additional view, and a transmission unit to transmit the 2D broadcast service of the main view, the 2D broadcast service of the additional view, the 3D broadcast service, and the PMT to a 3D broadcast receiving apparatus, wherein the 3D broadcast service does not share a video or audio with either of the 2D broadcast service of the main view and the 2D broadcast service of the additional view.

The 2D broadcast service of the main view, the 2D broadcast service of the additional view, and the 3D broadcast service may be included in the same transport stream or different transport streams.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 illustrates a configuration of a three-dimensional (3D) broadcast providing apparatus and a 3D broadcast receiving apparatus according to an example embodiment;
FIG. 2 illustrates a method of configuring a 2D broadcast service and a 3D broadcast service so as to provide the 3D broadcast service according to an example embodiment;
FIG. 3 illustrates an example of a method of adding 3D service information to a PMT according to an example embodiment;
FIG. 4 illustrates another example of a method of adding 3D service information to a PMT according to an example embodiment;
FIG. 5 illustrates still another example of a method of adding 3D service information to a PMT according to an example embodiment;
FIG. 6 illustrates a process of transmitting a 2D broadcast service of a main view and a 2D broadcast service of an additional view by a 3D broadcast providing apparatus to a 3D broadcast receiving apparatus according to an example embodiment;
FIG. 7 illustrates a process of synchronizing a 2D broadcast service of a main view and a 2D broadcast service of an additional view according to an example embodiment;
FIG. 8 is a flowchart illustrating an example of a method of providing a 3D broadcast service according to an example embodiment; and
FIG. 9 is a flowchart illustrating another example of a method of providing a 3D broadcast service according to an example embodiment.

DETAILED DESCRIPTION

Hereinafter, exemplary embodiments of the present invention will be described in detail with reference to the accompanying drawings.

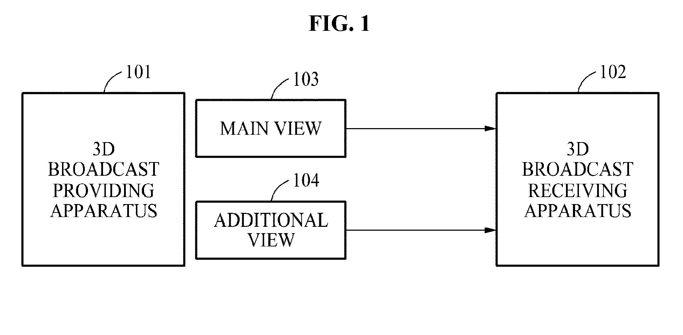

FIG. 1 illustrates a configuration of a three-dimensional (3D) broadcast providing apparatus and a 3D broadcast receiving apparatus according to an example embodiment.

Referring to FIG. 1, the 3D broadcast providing apparatus 101 may transmit a main view 103 and an additional view 104 to the 3D broadcast receiving apparatus 102 to provide a 3D broadcast service. Here, the main view 103 and the additional view 104 may be views generated by independent two-dimensional (2D) broadcast services. The main view 103 and the additional view 104 may be displayed separately as a left-eye view and a right-eye view depending on a transport stream transmitted to the 3D broadcast receiving apparatus 102.

The 3D broadcast providing apparatus 101 may include 3D service information to provide the 3D broadcast service. Here, the 3D service information may be information for providing a 2D broadcast service of the main view 103 and a 2D broadcast service of the additional view 104 as the 3D broadcast service.

In detail, the 3D service information may be signaled by a predefined descriptor. Here, the descriptor may include at least one of a service type provided to the 3D broadcast receiving apparatus 102, a flag for distinguishing right and left arrangements of the main view 103 and the additional view 104, and information on synchronization (referred to as synchronization information) between the main view 103 and the additional view 104.

The service type may specify whether a type of content provided by the 3D broadcast receiving apparatus 102 is a 2D broadcast service or 3D broadcast service. The flag may be information specifying whether the main view 103 and the additional view 104 are a left-eye view or a right-eye view. For example, the flag may be represented by leftview-flag. The flag having a value of 1 indicates that the main view 103 or additional view 104 including the flag is a left-eye view, whereas the flag having a value of 0 indicates that the main view 103 or additional view 104 including the flag is a right-eye view.

The synchronization information may be information for identifying a frame in which the main view 103 and the additional view 104 are matched with each other using an output timestamp of the 2D broadcast service of the main view 103 and an output timestamp of the 2D broadcast service of the additional view 104.

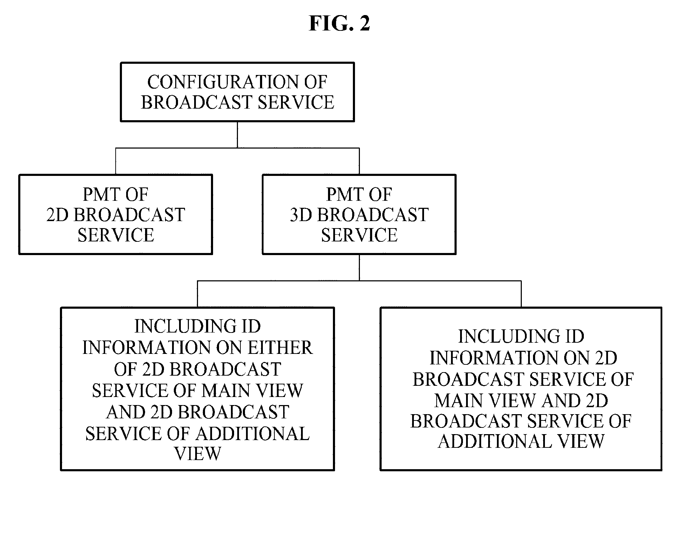

The 3D broadcast providing apparatus 101 may add the 3D service information to a program map table (PMT) included in the 2D broadcast services or 3D broadcast service. A configuration for adding the 3D service information will be described in detail with reference to FIGS. 2 to 5.

Subsequently, the 3D broadcast providing apparatus 101 may transmit the 2D broadcast service of the main view 103, the 2D broadcast service of the additional view 104, the 3D broadcast service, and the PMT to the 3D broadcast receiving apparatus 102. The 3D broadcast receiving apparatus 102 may provide a user with the 3D broadcast service using the 2D broadcast service of the main view 103 and the 2D broadcast service of the additional view 104 received from the main view 103.

The 3D broadcast receiving apparatus 102 may simultaneously receive/compose/play back the two 2D broadcast services forming left and right views of the 3D broadcast service in order to provide the 3D broadcast service based on the 3D service information added to the PMT included in the 2D broadcast service of the main view 103, the 2D broadcast service of the additional view 104 or the separate 3D dedicated service. Here, the 3D broadcast receiving apparatus 102 may provide the user with the 3D broadcast service using the main view 103 and the additional view 104 in a simulcasting period in which the 2D broadcast service of the main view 103 and the 2D broadcast service of the additional view 104 are respectively left and right views of a 3D view. That is, the 3D broadcast receiving apparatus 102 may receive the main view 103 and the additional view 104 from the 3D broadcast providing apparatus 101 and compose the main view 103 and the additional view 104 in the simulcasting period, thereby providing the user with the 3D broadcast service.

Here, the 2D broadcast service of the main view 103 and the 2D broadcast service of the additional view 104 may be available in Digital Video Broadcasting (DVB)-based service providing mode. For instance, the 2D broadcast service of the main view 103 and the 2D broadcast service of the additional view 104 may be available in the DVB-based service providing method, such as DVB-T, DVB-T2, DVB-S, DVB-S2, DVB-C, DVB-C2, or the like.

In addition, the 2D broadcast service of the main view 103 and the 2D broadcast service of the additional view 104 may be utilized for a DVB-T2 service providing mode. Here, the DVB-T2 service providing mode may provide the same program in two service types having different levels of robustness in a single channel.

Ultimately, the 3D broadcast receiving apparatus 102 may simultaneously receive/play back/compose the 2D broadcast service of the main view 103 and the 2D broadcast service of the additional view 104 which are independent, thereby providing the 3D broadcast service without assigning a separate bandwidth for the 3D broadcast service.

Thus, the 3D broadcast providing apparatus 101 may use the 2D broadcast services of the main view 103 and the additional view 104 for the 3D broadcast service, thereby providing a 3D broadcast service providing method which improves frequency efficiency and allows a conventional receiving apparatus providing a 2D broadcast service to be used as the 3D broadcast receiving apparatus 102.

FIG. 2 illustrates a method of configuring a 2D broadcast service and a 3D broadcast service so as to provide the 3D broadcast service according to an example embodiment.

Referring to FIG. 2, a 3D broadcast providing apparatus may add 3D service information to a PMT depending on a broadcast service configuration for providing a 3D broadcast service.

Here, broadcast service configurations may be classified according to a broadcast service including a PMT having 3D service information added. That is, broadcast service configurations may be classified into two types as follows.

According to a first embodiment, the 3D broadcast providing apparatus may add the 3D service information to a PMT of a 2D broadcast service.

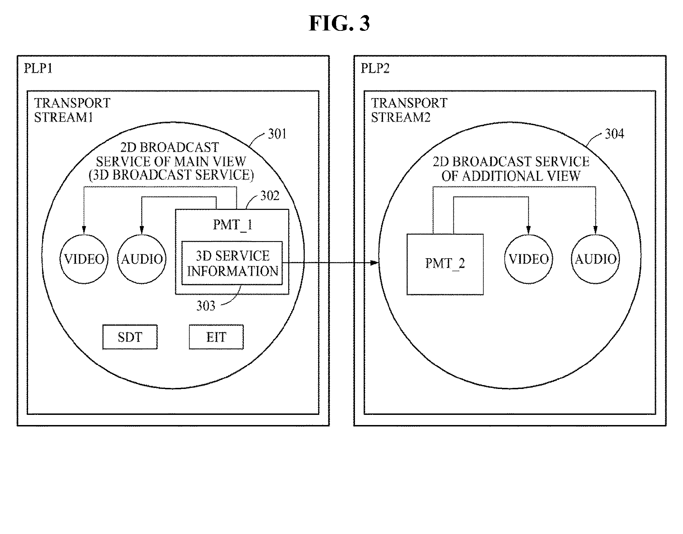

In detail, the 3D broadcast providing apparatus may add the 3D service information to a PMT of either of a 2D broadcast service of a main view and a 2D broadcast service of an additional view. The 3D service information may include identification (ID) information on a 2D broadcast service including a PMT to which the 3D service information is not added, which will be described in detail with reference to FIG. 3.

For instance, the 3D broadcast providing apparatus may add the 3D service information to the PMT of the 2D broadcast service of the main view. The 3D service information may include ID information on the 2D broadcast service of the additional view.

According to a second embodiment, the 3D broadcast providing apparatus may add the 3D service information to a PMT of the separate 3D broadcast service.

In detail, the 3D broadcast providing apparatus may add the 3D service information to the PMT of the 3D broadcast service distinguished from the 2D broadcast service of the main view and the 2D broadcast service of the additional view. Here, the 3D broadcast services may be divided into a type sharing a video or audio with any one of the 2D broadcast service of the main view and the 2D broadcast service of the additional view or a type not sharing the video or audio.

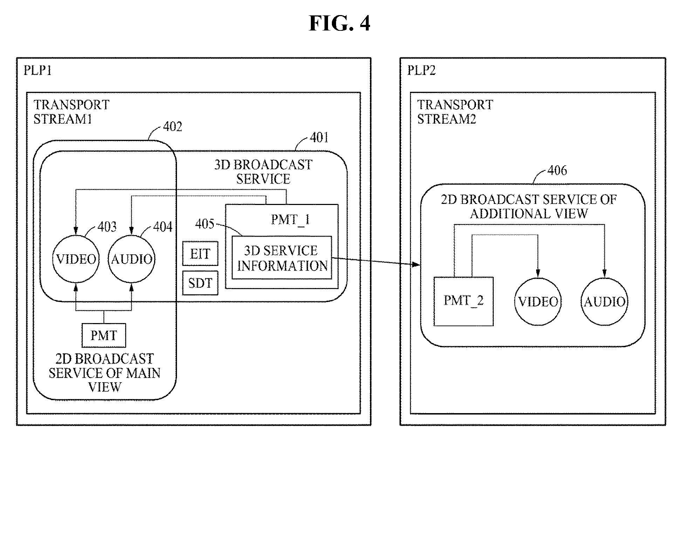

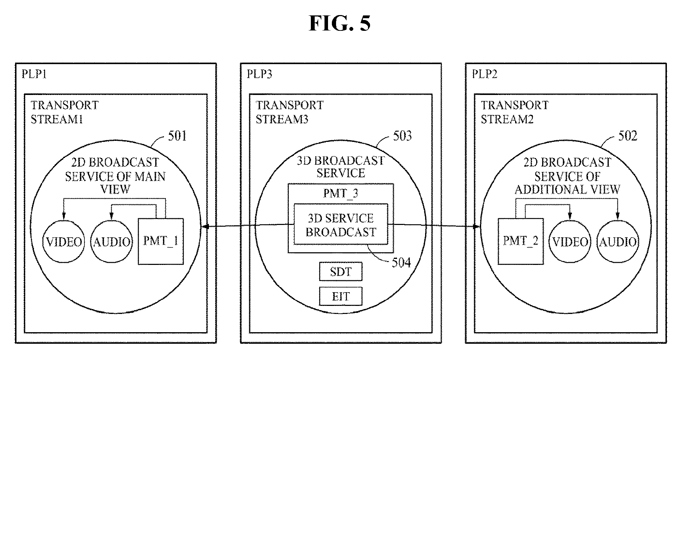

The 3D service information may include, depending on a 3D broadcast service type, ID information on either of the 2D broadcast service of the main view and the 2D broadcast service of the additional view or ID information on each of the 2D broadcast service of the main view and the 2D broadcast service of the additional view, which will be described in detail with reference to FIGS. 4 and 5.

FIG. 3 illustrates an example of a method of adding 3D service information to a PMT according to an example embodiment.

Referring to FIG. 3, a 2D broadcast service 301 of a main view and a 2D broadcast service 304 of an additional view may be present in transport streams included in different channels. Here, the 2D broadcast service 301 of the main view and the 2D broadcast service 304 of the additional view may be present in a transport stream in the same channel in some cases. For instance, as described above, when the DVB-T2 service providing mode is used, the 2D broadcast service 301 of the main view and the 2D broadcast service 304 of the additional view may be present in a single channel.

For example, the 2D broadcast service 301 of the main view may be included in a PLP-1 channel in a broadcast environment in accordance with DVB-T2, and the 2D broadcast service 304 of the additional view may be include in a PLP-2 channel in the broadcast environment in accordance with DVB-T2. Alternatively, unlike in FIG 3, the 2D broadcast service 301 of the main view and the 2D broadcast service 304 of the additional view may be included in a transport stream in a single PLP channel in the broadcast environment in accordance with DVB-T2.

The 3D broadcast providing apparatus may add the 3D service information to a PMT of either of the 2D broadcast service 301 of the main view and the 2D broadcast service 304 of the additional view. Hereinafter, for more accurate description, the present invention will be described on the assumption that the 3D service information 303 is added to a PMT of the 2D broadcast service 301 of the main view.

In detail, the 3D broadcast providing apparatus may add the 3D service information 303 to the PMT 302 included in the 2D broadcast service 301 of the main view. That is, the 3D broadcast providing apparatus may add signaling information on the 3D service information to the 2D broadcast service 301 of the main view so as to change a service type from the 2D broadcast service 301 of the main view to the 3D broadcast service without any channel change.

The signaling information may include a Service Description Table (SDT) and an Event Information Table (EIT) in addition to the PMT. Here, the SDT may include description information for identifying whether the main view or additional view is a 2D broadcast service or 3D broadcast service. The SDT may use the same service type (service_type) and component type (component_type) as those for a 2D broadcast service to maintain compatibility with a 2D broadcast receiving apparatus. The service type and component type may be defined as follows.

The service type may be a field constituting service_descriptor() in the SDT. For example, the service type may use "MPEG-2 HD digital television service" (type 0x11) or "advanced codec HD services" (types 0x19, 0x1A, and 0x1B) for a 2D broadcast service. The service type may be available when service_type for UHD and HEVC is determined later by DVB.

The component type may be a field constituting component_descriptor() in the SDT. For example, the component type may use "MPEG-2 high definition video" type (0x01-0x0A, 0x01-0x0B, 0x01-0x0E or 0x01-0x0F) or "H.264/AVC high definition video" type (0x05-0x0B or 0x05-0x0F) for a 2D broadcast service. The component type may be available when component_type for UHD and HEVC is determined later by DVB.

The EIT may signal a component type in the same manner as the SDT.

The PMT 302 may define a descriptor for adding the 3D service information. The 3D broadcast providing apparatus may add the 3D service information in a descriptor format to the PMT 302 of the 2D broadcast service 301 of the main view according to the descriptor defined in the PMT 302.

The 3D service information may include at least one of a service type provided to the 3D broadcast receiving apparatus, ID information, a flag for distinguishing right and left arrangements of the main view and the additional view, and synchronization information between the main view and the additional view.

The service type may specify a type of a program provided by the 3D broadcast receiving apparatus, that is, indicates whether the program is a 2D broadcast service or 3D broadcast service.

The ID information may include different pieces of ID information depending on a view of a 2D broadcast service to which the 3D service information 303 is added. Specifically, when the 3D service information is added to the PMT of the 2D broadcast service of the main view, the ID information may include at least one of a transport stream ID of the additional view, a network ID of the additional view, and a service ID of the additional view. When the 3D service information is added to the PMT of the 2D broadcast service of the additional view, the ID information may include at least one of a transport stream ID of the main view, a network ID of the main view, and a service ID of the main view.

The flag having a value of 1 may indicate that the main view or additional view including the flag is a left-eye view, and the flag having a value of 0 may indicate that the main view or additional view including the flag is a right-eye view. That is, the flag may represent a criterion for determining whether the main view and the additional view provided by the 3D broadcast providing apparatus correspond to a left view or right view.

The synchronization information may be information for identifying a frame in which the main view and the additional view are matched with each other using an output timestamp of the 2D broadcast service of the main view and an output timestamp of the 2D broadcast service of the additional view.

The descriptor defined in the PMT may be specified as in Table 1.

[Table 1]

| Syntax | No. of Bits | Format |
|---|---|---|
| hybrid_stereoscopic_service_descriptor() { | | |
|     descriptor_tag | 8 | uimsbf |
|     descriptor_length | 8 | uimsbf |
|     Reserved | 5 | '11111' |
|     stereoscopic_service_type | 3 | bslbf |
|     If (stereoscopic_service_type == '001') { | | |
|         counterpart_transport_stream_id | 16 | uimsbf |
|         counterpart_original_network_id | 16 | uimsbf |
|         counterpart_service_id | 16 | uimsbf |
|         Reserved | 6 | '111111' |
|         leftview_flag | 1 | bslbf |
|         offset_sign_bit | 1 | bslbf |
|         timestamp_offset | 32 | uimsbf |
|     } | | |
| } | | |

Referring to Table 1, stereoscopic_service_type may specify the service type, which may indicate a type of a program currently provided by the 3D broadcast providing apparatus through a 3-bit field.

Counterpart_transport_stream_id, counterpart_original_network_id, and counterpart_service_id may specify the ID information. With respect to the 2D broadcast service of the main view, counterpart_transport_stream_id may specify the transport stream ID of the 2D broadcast service 304 of the additional view, counterpart_original_network_id may specify the original network ID of the 2D broadcast service 304 of the additional view, and counterpart_service_id may specify the service ID of the 2D broadcast service 304 of the additional view, which may be represented in the same format as program_number in the PMT.

Leftview_flag may be the flag for distinguishing right and left arrangements of the main view and the additional view with respect to the 2D broadcast service of the main view or 2D broadcast service of the additional view.

Offset_sign_bit and timestamp_offset may specify the synchronization information, wherein offset_sign_bit is a 1-bit field which may specify a sign of timestamp_offset. The field having a value of 0 may mean that timestamp_offset is positive, and the field having a value of 1 may mean that timestamp_offset is negative. In addition, when timestamp_offset is 0, the offset_sign_bit may be ignored. Timestamp_offset may specify an absolute value of a difference between PTS values of right and left streams.

Thus, the 3D broadcast providing apparatus may add the 3D service information to the 2D broadcast service without creating an additional channel. The 3D broadcast providing apparatus may add the 3D service information to the PMT included in the 2D broadcast service conventionally used, thereby simplifying a signaling structure for the 3D service information.

FIG. 4 illustrates another example of a method of adding 3D service information to a PMT according to an example embodiment.

Referring to FIG. 4, a 2D broadcast service 402 of a main view and a 2D broadcast service 406 of an additional view may be present in transport streams included in different channels. Here, the 2D broadcast service 402 of the main view and the 2D broadcast service 406 of the additional view may be present in a transport stream in the same channel in some cases. Either of the 2D broadcast service 402 of the main view and the 2D broadcast service 406 of the additional view may share an audio or video of the 2D broadcast service with the 3D broadcast service 401. Here, the 3D broadcast service 401 may be a separate service from the 2D broadcast service 402 of the main view and the 2D broadcast service 406 of the additional view. The 2D broadcast service 402 of the main view and the 3D broadcast service 401 which share the video 403 or audio 404 may be included in a transport stream in the same channel.

The 3D broadcast providing apparatus may add 3D service information 405 to a PMT of the 3D broadcast service 401 sharing the video 403 or audio 404 of the 2D broadcast service 402 of the main view. That is, the 3D broadcast providing apparatus may include the video 403 or audio 404 of the 2D broadcast service 402 of the main view in the 3D broadcast service in an ES form and add signaling information on the 3D service information 405 to the PMT of the 3D broadcast service.

The signaling information may include an SDT and an EIT. Here, the SDT may include information only for the 3D broadcast service and use a service type and a component type for this service. The service type and the component type may be defined as follows.

The service type may be a field constituting service_descriptor() in the SDT. For example, the service type may be information on a service type confined to a 3D broadcast service which is not interpreted by a 2D broadcast receiving apparatus and use "Hybrid 3DTV service" (type 0x1F) newly defined for a hybrid 3DTV service. Alternatively, the service type may use "MPEG-2 HD digital television service" (type 0x11) or "advanced codec HD services" (types 0x19, 0x1A, and 0x1B) for a 2D broadcast service.

The component type may be a field constituting component_descriptor() in the SDT. For example, the component type may use "MPEG-2 high definition video" type (0x01-0x0A, 0x01-0x0B, 0x01-0x0E or 0x01-0x0F) or "H.264/AVC high definition video" type (0x05-0x0B or 0x05-0x0F) for a 2D broadcast service. The component type may be available when component_type for UHD and HEVC is determined later by DVB.

The EIT may signal a component type in the same manner as the SDT.

The PMT may define a descriptor for adding the 3D service information. The 3D broadcast providing apparatus may add the 3D service information in a descriptor format to the PMT of the 3D broadcast service 401 according to the descriptor defined in the PMT, which has been described above in detail with reference to FIG. 3 and thus will not be repeatedly described herein.

Ultimately, the 3D broadcast providing apparatus may only share the video 403 or audio 404 of the 2D broadcast service 402 of the main view with the 3D broadcast service but not modify the PMT of the 2D broadcast service 402 of the main view, thereby resolving an issue of backward compatibility with the existing 2D broadcast receiving apparatus. That is, the 3D broadcast providing apparatus may ensure that a user normally watches a 2D service through a 2D receiving device conventionally used by the user even though a 3D broadcast service is provided, because the 3D broadcast providing apparatus may not modify the PMT of the 2D broadcast service 402 of the main view to maintain the signaling information on the existing 2D broadcast service included in the main view.

FIG. 5 illustrates still another example of a method of adding 3D service information to a PMT according to example embodiment.

Referring to FIG. 5, a 2D broadcast service 501 of a main view, a 2D broadcast service 502 of an additional view, and a 3D broadcast service 503 may be present in transport streams included in different channels or in a transport stream included in the same channel. Here, the 3D broadcast service 503 may be a separate service from the 2D broadcast service 501 of the main view and the 2D broadcast service 502 of the additional view.

In detail, the 3D broadcast service 503 may include a PMT and signaling information separately from the 2D broadcast service 501 of the main view and the 2D broadcast service 502 of the additional view. The PMT of the 3D broadcast service 503 may additionally include 3D service information 504.

The signaling information may include an SDT and an EIT. Here, the SDT may include information only for the 3D broadcast service and use a service type and a component type for this service. The service type and the component type may be defined as follows.

The service type may be a field constituting service_descriptor() in the SDT. For example, the service type may be information on a service type confined to a 3D broadcast service which is not interpreted by a 2D broadcast receiving apparatus and use "Hybrid 3DTV service" (type 0x1F) newly defined for a hybrid 3DTV service. Alternatively, the service type may use "MPEG-2 HD digital television service" (type 0x11) or "advanced codec HD services" (types 0x19, 0x1A, and 0x1B) for a 2D broadcast service.

The component type may be a field constituting component_descriptor() in the SDT. For example, the component type may use "MPEG-2 high definition video" type (0x01-0x0A, 0x01-0x0B, 0x01-0x0E or 0x01-0x0F) or "H.264/AVC high definition video" type (0x05-0x0B or 0x05-0x0F) for a 2D broadcast service. The component type may be available when component_type for UHD and HEVC is determined later by DVB.

Further, the EIT signal a component type in the same manner as the SDT.

Here, the 3D service information 504 may include ID information on each of the 2D broadcast service 501 of the main view and the 2D broadcast service 502 of the additional view. Specifically, the 3D service information 504 may include at least one of a transport stream ID of the main view, a network ID of the main view, and a service ID of the main view with respect to the 2D broadcast service of the main view. The 3D service information 504 may include at least one of a transport stream ID of the additional view, a network ID of the additional view, and a service ID of the additional view with respect to the 2D broadcast service of the additional view.

That is, the 3D service information 504 added to the PMT of the 3D broadcast service may include the ID information on the 2D broadcast services of the main view and the additional view so as to simultaneously receive/compose/play back the main view and the additional view when a 3D broadcast receiving apparatus provides the 3D broadcast service.

Further, since the 3D service information 504 added to the PMT of the 3D broadcast service includes the ID information on the 2D broadcast service of the main view and the ID information on the 2D broadcast service of the additional view, part of the descriptor may be specified as in Table 2.

[Table 2]

| Syntax | No. of Bits | Format |
|---|---|---|
| hybrid_stereoscopic_service_descriptor() { | | |
|     descriptor_tag | 8 | uimsbf |
|     descriptor_length | 8 | uimsbf |
|     Reserved | 5 | '11111' |
|     stereoscopic_service_type | 3 | bslbf |
|     If (stereoscopic_service_type == '001') { | | |
|         mainview_transport_stream_id | 16 | uimsbf |
|         mainview_origmal_network_id | 16 | uimsbf |
|         mainview_service_id | 16 | uimsbf |
|         additionalview_transport_stream_id | 16 | uimsbf |
|         additional_original_network_id | 16 | uimsbf |
|         additionalview_service_id | 16 | uimsbf |
|         Reserved | 6 | '111111' |
|         leftview_flag | 1 | bslbf |
|         offset_sign_bit | 1 | bslbf |
|         timestamp_offset | 32 | uimsbf |
|     } | | |
| } | | |

Referring to Table 2, mainview_transport_stream_id, mainview_original_network_id, and mainview_service_id may specify the ID information.

Mainview_transport_stream_id may specify the transport stream ID of the 2D broadcast service of the main view, mainview_original_network_id may specify the original network ID of the 2D broadcast service of a main view, and mainview_service_id may specify the service ID of the 2D broadcast service of the main view. Meanwhile, fields starting with "additionalview" may specify the ID information on the 2D broadcast service of the additional view.

Ultimately, the 3D broadcast providing apparatus may not modify respective PMTs of the 2D broadcast service 501 of the main view and the 2D broadcast service 502 of the additional view, thereby resolving an issue of backward compatibility with the existing 2D broadcast receiving apparatus.

Further, the 3D broadcast providing apparatus may separate the 2D broadcast service 501 of the main view and the 2D broadcast service 502 of the additional view from the 3D broadcast service, thereby providing flexibility for the 3D broadcast service using the 2D broadcast services 501 and 502.

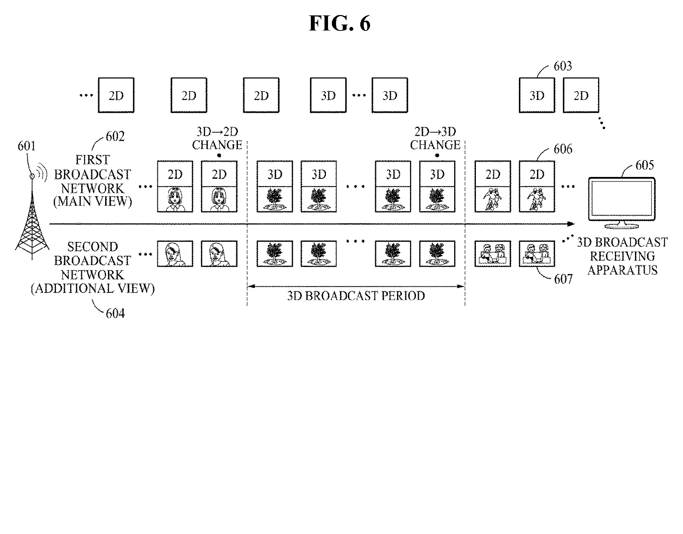

FIG. 6 illustrates a process of transmitting a main view and an additional view by a 3D broadcast providing apparatus to a 3D broadcast receiving apparatus according to an example embodiment.

Referring to FIG. 6, the 3D broadcast providing apparatus 601 may transmit the main view 602 and the additional view 604 to the 3D broadcast receiving apparatus 605. Here, the 3D broadcast providing apparatus 601 may transmit a descriptor defined in a PMT to the 3D broadcast receiving apparatus 605 using video frame header information on the main view 602.

In detail, the 3D broadcast providing apparatus 601 may insert the descriptor defined in the PMT into the video frame header information on the main view 602 and transmit the video frame header information on the main view 602 with the descriptor inserted to the 3D broadcast receiving apparatus 605. Here, the video frame header information on the main view 602 with the descriptor inserted may specify information on a boundary of a broadcast service for a program provided by the 3D broadcast receiving apparatus 605. That is, the video frame header information on the main view 602 with the descriptor inserted may specify a time at which a 2D broadcast service is changed to a 3D broadcast service or a time at which a 3D broadcast service is changed to a 2D broadcast service.

The 3D broadcast providing apparatus 601 may transmit the video frame header information on the main view 602 with the descriptor inserted in view of a time for service change performed by the 3D broadcast receiving apparatus 605.

According to a first embodiment, the 3D broadcast providing apparatus 601 may transmit a descriptor 603 specifying that a currently provided service is a 3D broadcast service to the 3D broadcast receiving apparatus 605 after the 3D broadcast receiving apparatus 605 actually provides the 3D broadcast service.

In detail, when the 3D broadcast receiving apparatus 605 changes a service type of a view based on the descriptor in the PMT, the 3D broadcast providing apparatus 601may transmit the descriptor 603 specifying the 3D broadcast service to the 3D broadcast receiving apparatus 605 after the 3D broadcast service is provided. That is, the descriptor 603 specifying the 3D broadcast service may need to be signaled after the 3D broadcast service is actually provided.

This may be for preventing a main view and an additional view which are not associated from being composed into a 3D broadcast service when the 3D broadcast receiving apparatus 605 simultaneously receives/composes/plays back the main view 602 and the additional view 604 to provide a 3D broadcast service.

According to a second embodiment, the 3D broadcast providing apparatus 601 may transmit, to the 3D broadcast receiving apparatus 605, a descriptor 603 specifying a period in which a 3D broadcast service starts for a next frame, before the 3D broadcast receiving apparatus 605 actually provides the 3D broadcast service.

In detail, when the 3D broadcast receiving apparatus 605 changes a service type of a view based on the video frame header information on the main view 602, the 3D broadcast receiving apparatus 601 may transmit the descriptor 603 specifying the 3D broadcast service to the 3D broadcast receiving apparatus 605 before the 3D broadcast service is provided. That is, the descriptor 603 specifying the 3D broadcast service may need to be signaled before the 3D broadcast service is actually provided.

For example, when the 3D broadcast receiving apparatus 605 is capable of selectively using the video frame header information on the main view 602 and the descriptor, the 3D broadcast receiving apparatus 605 may use the descriptor in the PMT only to identify the service type.

Here, when the descriptor specifying the 3D broadcast service is received before a period in which the 3D broadcast service is actually provided, the 3D broadcast receiving apparatus 605 may compose the main view 606 and the additional view 607 which are different. Thus, in order to prevent the main view 606 and the additional view 607 from being inappropriately composed, the 3D broadcast providing apparatus 601 may set current_next_indicator in the PMT to 0, thereby indicating that the 3D service information is not for a current application but for a following 3D broadcast service.

In addition, the 3D broadcast providing apparatus 601 may set current_next_indicator to 1, thereby indicating information specifying a period in which the 3D broadcast service is actually provided.

Here, when the video frame header information on the main view 602 is used, the 3D broadcast providing apparatus 601 may be classified as Advanced Video Coding (AVC)/High Efficiency Video Coding (HEVC) Video and MPEG-2 Video depending on a video frame, each of which may use the following fields.

Specifically, AVC/HEVC Video may signal whether a video frame is a 2D broadcast service or 3D broadcast service using a frame packing arrangement SEI message of a header of the video frame. For example, when the video frame header is a 2D broadcast service, AVC/HEVC Video may set frame_packing_arrangement_cancel_flag in the frame packing arrangement SEI message to 1 to transmit the flag to the 3D broadcast receiving apparatus. When the video frame header is a 3D broadcast service, AVC/HEVC Video may transmit the video frame header without including the frame packing arrangement SEI message.

Further, MPEG-2 Video may signal whether a frame is a 2D broadcast service or 3D broadcast service using frame_packing_arrangement_data of a header of the frame. For example, when the video frame header is a 2D broadcast service, MPEG-2 Video may set arrangement_type to 0001000 (2D video) and transmit the video frame header. When the video frame header is a 3D broadcast service, MPEG-2 Video may transmit the video frame header without including frame_packing_arrangement_data.

Here, in order to signal that a particular frame is 3D, transmitting the video frame header without including the packing arrangement SEI message or frame_packing_arrangement_data is for maintaining original purposes of the frame packing arrangement SEI message (AVC/HEVC) and frame_packing_arrangement_data (MPEG-2) which are transmitted for signaling a video frame type. That is, this may be for, as purposes of the frame packing arrangement SEI message(AVC/HEVC) and frame_packing_arrangement_data(MPEG-2), signaling an arrangement of frame-compatible views including both right and left views in a single view. Thus, the present invention may signal that the frame is a 2D view using conventional standards for a frame-compatible mode only for 2D frames, thereby transmitting 2D-3D boundary information without defining new signaling standards and violating the conventional standards.

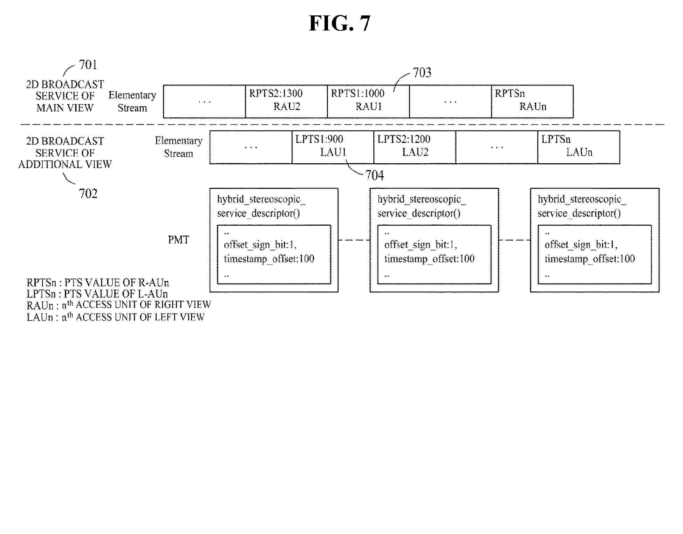

FIG. 7 illustrates a process of synchronizing a 2D broadcast service of a main view and a 2D broadcast service of an additional view according to an example embodiment.

Referring to FIG. 7, the 3D broadcast receiving apparatus 605 may synchronize the 2D broadcast service 701 of the main view and the 2D broadcast service 702 of the additional view so as to provide a 2D broadcast service as a 3D broadcast service.

In detail, the 3D broadcast receiving apparatus 605 may determine a service change time based on a descriptor in a PMT transmitted from the 3D broadcast providing apparatus. The 3D broadcast receiving apparatus 605 may synchronize the 2D broadcast service 701 of the main view and the 2D broadcast service 702 of the additional view corresponding to the service change time, thereby providing a 3D broadcast service.

Here, the 3D broadcast receiving apparatus 605 may synchronize the 2D broadcast services using an output timestamp of the 2D broadcast service 701 of the main view and an output timestamp of the 2D broadcast service 702 of the additional view. Here, the output timestamp of the 2D broadcast service 701 of the main view and the output timestamp of the 2D broadcast service 702 of the additional view may include different pieces of information by the main view and the additional view present independently.

Thus, the 3D broadcast receiving apparatus 605 may identify the output timestamp of the 2D broadcast service 701 of the main view and the output timestamp of the 2D broadcast service 702 of the additional view which specify the different pieces of information, thereby matching frames of the main view and the additional view.

The 3D broadcast receiving apparatus 605 according to the present invention may simultaneously receive/compose/play back the main view and the additional view to provide a 3D broadcast service, so that the output timestamp of the 2D broadcast service 701 of the main view and the output timestamp of the 2D broadcast service 702 of the additional view may have the same clock rate.

Ultimately, the 3D broadcast receiving apparatus 605 may use an offset between the output timestamp of the 2D broadcast service 701 of the main view and the output timestamp of the 2D broadcast service 702 of the additional view as synchronization information between the main view and the additional view so as to simultaneously receive/compose/play back the main view and the additional view.

Here, the synchronization information between the main view and the additional view may be divided into offset information and timestamp information. The offset information is defined by a field of offset_sign_bit, which may include 1 bit. The offset information may specify a sign of timestamp_offset. For example, the offset information equal to 0 may mean that timestamp_offset is positive, and the offset information equal to 1 may mean that timestamp_offset is negative. When timestamp_offset is 0, this field may be ignored.

The timestamp information is defined by a field of timestamp_offset, which may include 33 bits. For example, the timestamp information may specify an absolute value of a difference between PTS values of right and left streams.

Here, the synchronization information between the main view and the additional view is 3D service information, which may be included in the descriptor of the PMT and transmitted to the 3D broadcast receiving apparatus 605.

For instance, the 3D broadcast receiving apparatus 605 may match the main view and the additional view as follows. In detail, the 3D broadcast receiving apparatus 605 may assume that a transport stream including the 3D service information is a main view of a left-eye view and a transport stream including no 3D service information is an additional view of a right-eye view. Further, the 3D broadcast receiving apparatus 605 may refer to the transport stream of the main view as PTS and to the transport stream of the additional view as PTS'.

Here, PTS' may be transformed based on timestamp_offset by Equation 1 to use the same reference clock as that of PTS corresponding to the transport stream of the main view.

[Equation 1]

$$CT = \begin{cases} (RPTS + TO)\%2^{33}, & OSB = 0 \\ (RPTS - TO)\%2^{33}, & OSB = 1 \text{ and } RPTS \geq TO \\ (RPTS - TO + 2^{33})\%2^{33}, & OSB = 1 \text{ and } RPTS < TO \end{cases} \quad (1)$$

CT = Converted Timestamp
LPTS = PTS of the left view
RPTS = PTS of the right view
TO = Timestamp Offset
OSB = Offset Sign Bit

When a value of an output timestamp of transformed PTS' is defined as CT, the 3D broadcast receiving apparatus 605 may compose the main view and an additional view having a CT value equal to a PTS value of the main view into a 3D view, thereby providing a 3D broadcast service.

That is, when offset_sign_bit (OSB) is 1 and timestamp_offset (TO) is 100, a PTS of RAU1 of the transport stream of the main view, that is, RPTS1, may be 1000. Here, RPTS1 of 1000 is applied to Equation 1, thereby deriving an output timestamp (CT) of 900. Accordingly, the 3D broadcast receiving apparatus 605 may verify that the transport stream of the additional view corresponding to RAU1 of the transport stream of the main view is LAU1 704 having an LPTS value of 900.

Further, when a difference between timestamp values of successive frames is known in advance, the 3D broadcast receiving apparatus 605 may perform view synchronization for all services through an initial one-time calculation without performing an output timestamp transformation process based on Equation 1 for all frames. That is, when a difference between timestamp values of successive frames is 300, the 3D broadcast receiving apparatus 605 may verify that LPTS and RPTS values following an LPTS of 900 and an RPTS of 1000 are 1200 and 1300, respectively, and match views accordingly.

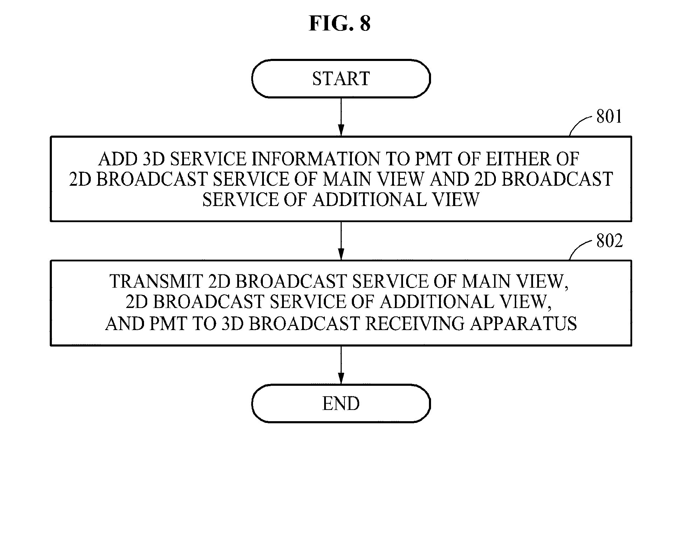

FIG. 8 is a flowchart illustrating an example of a method of providing a 3D broadcast service according to an example embodiment.

In operation 801, a 3D broadcast providing apparatus may add 3D service information to a PMT of either of a 2D broadcast service of a main view and a 2D broadcast service of an additional view. When the 3D service information is added to a PMT of the 2D broadcast service of the main view, the 3D service information may include ID information on the 2D broadcast service of the additional view. Alternatively, when the 3D service information is added to a PMT of the 2D broadcast service of the additional view, the 3D service information may include ID information on the 2D broadcast service of the main view.

In addition, the 3D service information may include at least one of a service type provided to a 3D broadcast receiving apparatus, a flag for distinguishing right and left arrangements of the main view and the additional view, and synchronization information between the main view and the additional view.

The ID information may include at least one of a transport stream ID of the additional view, a network ID of the additional view, and a service ID of the additional view when the 3D service information is added to the PMT of the 2D broadcast service of the main view. Alternatively, the ID information may include at least one of a transport stream ID of the main view, a network ID of the main view, and a service ID of the main view when the 3D service information is added to the PMT of the 2D broadcast service of the additional view.

Here, the 2D broadcast service of the main view and the 2D broadcast service of the additional view may be present in the same transport stream or different transport streams.

In operation 802, the 3D broadcast providing apparatus may transmit the 2D broadcast service of the main view, the 2D broadcast service of the additional view, and the PMT to the 3D broadcast receiving apparatus.

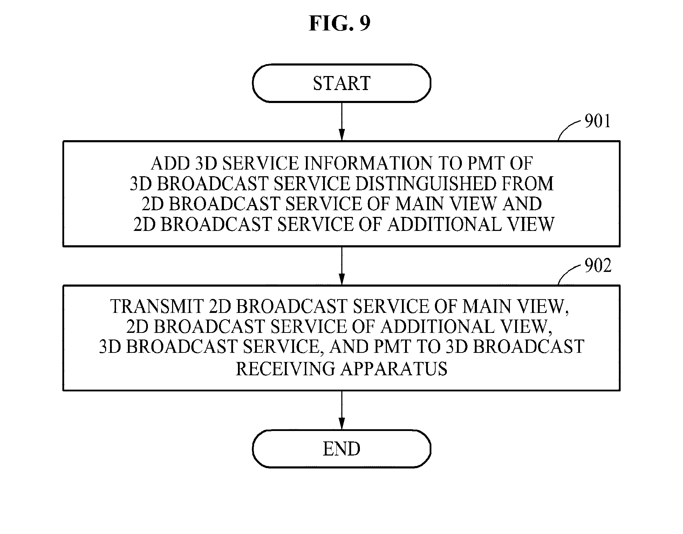

FIG. 9 is a flowchart illustrating another example of a method of providing a 3D broadcast service according to an example embodiment.

In operation 901, a 3D broadcast providing apparatus may add 3D service information to a PMT of a 3D broadcast service distinguished from a 2D broadcast service of a main view and a 2D broadcast service of an additional view.

According to a first embodiment, the 3D broadcast service may share a video or audio with either of the 2D broadcast service of the main view and the 2D broadcast service of the additional view.

When the 3D broadcast service shares a video or audio of the 2D broadcast service of the main view, the 3D service information may include ID information on the 2D broadcast service of the additional view. Alternatively, when the 3D broadcast service shares a video or audio of the 2D broadcast service of the additional view, the 3D service information may include ID information on the 2D broadcast service of the main view.

Here, when the 3D broadcast service shares the video or audio of the 2D broadcast service of the main view, the ID information may include at least one of a transport stream ID of the additional view, a network ID of the additional view, and a service ID of the additional view. Alternatively, when the 3D broadcast service shares the video or audio of the 2D broadcast service of the additional view, the ID information may include at least one of a transport stream ID of the main view, a network ID of the main view, and a service ID of the main view.

Here, when the 2D broadcast service of the main view shares the video or audio with the 3D broadcast service, the 2D broadcast service of the main view and the 3D broadcast service may be included in the same transport stream. Alternatively, when the 2D broadcast service of the additional view shares the video or audio with the 3D broadcast service, the 2D broadcast service of the additional view and the 3D broadcast service may be included in the same transport stream.

According to a second embodiment, the 3D broadcast service may not share a video or audio with the 2D broadcast service of the main view and the 2D broadcast service of the additional view.

The 3D broadcast service may include ID information on the 2D broadcast service of the main view including at least one of a transport stream ID of the main view, a network ID of the main view and a service ID of the main view, and ID information on the 2D broadcast service of the additional view including at least one of a transport stream ID of the additional view, a network ID of the additional view and a service ID of the additional view.

The 2D broadcast service of the main view, the 2D broadcast service of the additional view, and the 3D broadcast service may be present in the same transport stream or different transport streams.

In operation 902, the 3D broadcast providing apparatus may transmit the 2D broadcast service of the main view, the 2D broadcast service of the additional view, the 3D broadcast service, and the PMT to the 3D broadcast receiving apparatus.

According to an aspect of the present invention, it is possible to provide a 3D broadcast service providing method of utilizing 2D broadcast services independently present as a main view and an additional view in order to provide a 3D broadcast service, thereby maximizing frequency efficiency.

The methods according to the embodiments of the present invention may be realized as program instructions implemented by various computers and be recorded in non-transitory computer-readable media. The media may include, alone or in combination, the program instructions, data files, data structures, and the like. The program instructions recorded in the media may be designed and configured specially for the present invention or be known and available to those skilled in computer software.

While the present invention has been described with reference to a few exemplary embodiments and the accompanying drawings, the present invention is not limited to the described exemplary embodiments. Instead, it would be appreciated by those skilled in the art that various modifications and variations can be made from the foregoing descriptions.

Therefore, it should be noted that the scope of the present invention is not limited by the illustrated embodiments but defined by the appended claims and their equivalents.

**Claims**

1. A method of providing a three-dimensional (3D) broadcast service performed by a 3D broadcast providing apparatus, the method comprising:

   adding 3D service information to a program map table (PMT) of either of a 2D broadcast service of a main view and a 2D broadcast service of an additional view; and
   transmitting the 2D broadcast service of the main view, the 2D broadcast service of the additional view, and the PMT to a 3D broadcast receiving apparatus.

2. The method of claim 1, wherein the 3D service information comprises identification (ID) information on the 2D broadcast service of the additional view when the 3D service information is added to a PMT of the 2D broadcast service of the main view, and the 3D service information comprises ID information on the 2D broadcast service of the main view when the 3D service information is added to a PMT of the 2D broadcast service of the additional view.

3. The method of claim 2, wherein the ID information comprises at least one of a transport stream ID of the additional view, a network ID of the additional view, and a service ID of the additional view when the 3D service information is added to the PMT of the 2D broadcast service of the main view, and the ID information comprises at least one of a transport stream ID of the main view, a network ID of the main view, and a service ID of the main view when the 3D service information is added to the PMT of the 2D broadcast service of the additional view.

4. The method of claim 1, wherein the 3D service information comprises at least one of a service type provided to the 3D broadcast receiving apparatus, a flag for distinguishing right and left arrangements of the main view and the additional view, and information on synchronization between the main view and the additional view.

5. The method of one of claims 1 to 4, wherein the 2D broadcast service of the main view and the 2D broadcast service of the additional view are comprised in the same transport stream or different transport streams.

6. A method of providing a three-dimensional (3D) broadcast service performed by a 3D broadcast providing apparatus, the method comprising:

   adding 3D service information to a program map table (PMT) of a 3D broadcast service distinguished from a 2D broadcast service of a main view and a 2D broadcast service of an additional view; and
   transmitting the 2D broadcast service of the main view, the 2D broadcast service of the additional view, the 3D broadcast service, and the PMT to a 3D broadcast receiving apparatus,
   wherein the 3D broadcast service shares a video or audio with either of the 2D broadcast service of the main view and the 2D broadcast service of the additional view.

7. The method of claim 6, wherein the 3D service information comprises identification (ID) information on the 2D broadcast service of the additional view when the 3D broadcast service shares a video or audio of the 2D broadcast service of the main view, and the 3D service information comprises ID information on the 2D broadcast service of the main view when the 3D broadcast service shares a video or audio of the 2D broadcast service of the additional view.

8. The method of claim 7, wherein the ID information comprises at least one of a transport stream ID of the additional view, a network ID of the additional view, and a service ID of the additional view when the 3D broadcast service shares the video or audio of the 2D broadcast service of the main view, and the ID information comprises at least one of a transport stream ID of the main view, a network ID of the main view, and a service ID of the main view when the 3D broadcast service shares the video or audio of the 2D broadcast service of the additional view.

9. The method of claim 6, wherein the 3D service information comprises at least one of a service type provided to the 3D broadcast receiving apparatus, a flag for distinguishing right and left arrangements of the main view and the additional view, and information on synchronization between the main view and the additional view.

10. The method of one of claims 6 to 9, wherein the 2D broadcast service of the main view and the 3D broadcast service are comprised in the same transport stream when the 2D broadcast service of the main view shares the video or audio with the 3D broadcast service, and the 2D broadcast service of the additional view and the 3D broadcast service are comprised in the same transport stream when the 2D broadcast service of the additional view shares the video or audio with the 3D broadcast service.

11. A method of providing a three-dimensional (3D) broadcast service performed by a 3D broadcast providing apparatus, the method comprising:

adding 3D service information to a program map table (PMT) of a 3D broadcast service distinguished from a 2D broadcast service of a main view and a 2D broadcast service of an additional view; and
transmitting the 2D broadcast service of the main view, the 2D broadcast service of the additional view, the 3D broadcast service, and the PMT to a 3D broadcast receiving apparatus,
wherein the 3D broadcast service does not share a video or audio with the 2D broadcast service of the main view and the 2D broadcast service of the additional view.

12. The method of claim 11, wherein 3D service information comprises identification (ID) information on the 2D broadcast service of the main view comprising at least one of a transport stream ID of the main view, a network ID of the main view and a service ID of the main view, and ID information on the 2D broadcast service of the additional view comprising at least one of a transport stream ID of the additional view, a network ID of the additional view and a service ID of the additional view.

13. The method of claim 11, wherein 3D service information comprises at least one of a service type provided to the 3D broadcast receiving apparatus, a flag for distinguishing right and left arrangements of the main view and the additional view, and information on synchronization between the main view and the additional view.

14. The method of claim 11, 12 or 13 wherein the 2D broadcast service of the main view, the 2D broadcast service of the additional view, and the 3D broadcast service are comprised in the same transport stream or different transport streams.

**FIG. 1**

```
                 ┌─ 101              ┌─ 103                                    ┌─ 102
  ┌──────────────┐        ┌────────────────┐                      ┌──────────────┐
  │              │        │   MAIN VIEW    │ ───────────────────► │              │
  │      3D      │        └────────────────┘                      │      3D      │
  │  BROADCAST   │                  ┌─ 104                         │  BROADCAST   │
  │  PROVIDING   │        ┌────────────────┐                      │  RECEIVING   │
  │  APPARATUS   │        │   ADDITIONAL   │ ───────────────────► │  APPARATUS   │
  │              │        │      VIEW      │                      │              │
  └──────────────┘        └────────────────┘                      └──────────────┘
```

**FIG. 2**

```
          ┌─────────────────────┐
          │  CONFIGURATION OF   │
          │  BROADCAST SERVICE  │
          └─────────────────────┘
                     │
         ┌───────────┴───────────┐
┌─────────────────┐     ┌─────────────────┐
│     PMT OF      │     │     PMT OF      │
│  2D BROADCAST   │     │  3D BROADCAST   │
│    SERVICE      │     │    SERVICE      │
└─────────────────┘     └─────────────────┘
                                │
                    ┌───────────┴───────────┐
```

| INCLUDING ID INFORMATION ON EITHER OF 2D BROADCAST SERVICE OF MAIN VIEW AND 2D BROADCAST SERVICE OF ADDITIONAL VIEW | INCLUDING ID INFORMATION ON 2D BROADCAST SERVICE OF MAIN VIEW AND 2D BROADCAST SERVICE OF ADDITIONAL VIEW |

**FIG. 3**

# FIG. 4

# FIG. 5

PLP1

TRANSPORT STREAM1

501

2D BROADCAST SERVICE OF MAIN VIEW

VIDEO  AUDIO  PMT_1

PLP3

TRANSPORT STREAM3

503

3D BROADCAST SERVICE

PMT_3

3D SERVICE BROADCAST

504

SDT

EIT

PLP2

TRANSPORT STREAM2

502

2D BROADCAST SERVICE OF ADDITIONAL VIEW

PMT_2  VIDEO  AUDIO

# FIG. 6

# FIG. 7

2D BROADCAST SERVICE OF MAIN VIEW — 701

2D BROADCAST SERVICE OF ADDITIONAL VIEW — 702

| | Elementary Stream | ... | RPTS2:1300 RAU2 | RPTS1:1000 RAU1 — 703 | ... | RPTSn RAUn |

| | Elementary Stream | ... | LPTS1:900 LAU1 | LPTS2:1200 LAU2 | ... | LPTSn LAUn |

704

PMT

| hybrid_stereoscopic_ service_descriptor()  
offset_sign_bit:1,  
timestamp_offset:100 | hybrid_stereoscopic_ service_descriptor()  
offset_sign_bit:1,  
timestamp_offset:100 | hybrid_stereoscopic_ service_descriptor()  
offset_sign_bit:1,  
timestamp_offset:100 |

RPTSn : PTS VALUE OF R-AUn  
LPTSn : PTS VALUE OF L-AUn  
RAUn : n<sup>th</sup> ACCESS UNIT OF RIGHT VIEW  
LAUn : n<sup>th</sup> ACCESS UNIT OF LEFT VIEW

# FIG. 8

```
┌─────────────┐
│    START    │
└─────────────┘
       │
       ▼
```

┌──────────────────────────────────────────────────────────────┐ ⌐801
│           ADD 3D SERVICE INFORMATION TO PMT OF EITHER OF        │
│   2D BROADCAST SERVICE OF MAIN VIEW AND 2D BROADCAST            │
│              SERVICE OF ADDITIONAL VIEW                         │
└──────────────────────────────────────────────────────────────┘

┌──────────────────────────────────────────────────────────────┐ ⌐802
│         TRANSMIT 2D BROADCAST SERVICE OF MAIN VIEW,            │
│          2D BROADCAST SERVICE OF ADDITIONAL VIEW,             │
│       AND PMT TO 3D BROADCAST RECEIVING APPARATUS             │
└──────────────────────────────────────────────────────────────┘

```
       │
       ▼
┌─────────────┐
│     END     │
└─────────────┘
```

**FIG. 9**

```
                    ┌─────────────┐
                    │    START    │
                    └─────────────┘
                           │
                           ▼                      ⌐901
  ┌──────────────────────────────────────────────────┐
  │          ADD 3D SERVICE INFORMATION TO PMT OF     │
  │       3D BROADCAST SERVICE DISTINGUISHED FROM     │
  │          2D BROADCAST SERVICE OF MAIN VIEW AND    │
  │          2D BROADCAST SERVICE OF ADDITIONAL VIEW  │
  └──────────────────────────────────────────────────┘
                           │
                           ▼                      ⌐902
  ┌──────────────────────────────────────────────────┐
  │      TRANSMIT 2D BROADCAST SERVICE OF MAIN VIEW,  │
  │        2D BROADCAST SERVICE OF ADDITIONAL VIEW,   │
  │   3D BROADCAST SERVICE, AND PMT TO 3D BROADCAST   │
  │               RECEIVING APPARATUS                 │
  └──────────────────────────────────────────────────┘
                           │
                           ▼
                    ┌─────────────┐
                    │     END     │
                    └─────────────┘
```

**Europäisches Patentamt**
**European Patent Office**
**Office européen des brevets**

# EUROPEAN SEARCH REPORT

Application Number

EP 15 19 3660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/119955 A1 (SAMSUNG ELECTRONICS CO LTD [KR]) 1 October 2009 (2009-10-01) * figure 5 * * paragraph [0017] * * paragraph [0021] * * paragraph [0032] - paragraph [0035] * * paragraph [0073] - paragraph [0076] * ----- | 1-14 | INV. H04N13/00 H04N21/2362 |
| A | EP 2 373 042 A1 (LG ELECTRONICS INC [KR]) 5 October 2011 (2011-10-05) * abstract * ----- | 1,6,11 | |
| A | WO 2013/183947 A1 (LG ELECTRONICS INC [KR]) 12 December 2013 (2013-12-12) * abstract * ----- | 1,6,11 | |

TECHNICAL FIELDS
SEARCHED (IPC)

H04N

The present search report has been drawn up for all claims

| Place of search | Date of completion of the search | Examiner |
|---|---|---|
| The Hague | 17 June 2016 | Cooke, Edward |

EPO FORM 1503 03.82 (P04C01)

## ANNEX TO THE EUROPEAN SEARCH REPORT
## ON EUROPEAN PATENT APPLICATION NO.

EP 15 19 3660

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2016

| Patent document cited in search report | Publication date | Patent family member(s) | Publication date |
|---|---|---|---|
| WO 2009119955 A1 | 01-10-2009 | CN 101919259 A | 15-12-2010 |
| | | EP 2255539 A1 | 01-12-2010 |
| | | KR 20090102116 A | 30-09-2009 |
| | | US 2009245347 A1 | 01-10-2009 |
| | | WO 2009119955 A1 | 01-10-2009 |
| EP 2373042 A1 | 05-10-2011 | CA 2748510 A1 | 08-07-2010 |
| | | CN 102265623 A | 30-11-2011 |
| | | CN 105025312 A | 04-11-2015 |
| | | EP 2373042 A1 | 05-10-2011 |
| | | EP 2439954 A1 | 11-04-2012 |
| | | EP 2574072 A1 | 27-03-2013 |
| | | KR 20110105776 A | 27-09-2011 |
| | | KR 20120123147 A | 07-11-2012 |
| | | KR 20130029120 A | 21-03-2013 |
| | | KR 20130052638 A | 22-05-2013 |
| | | US 2011261158 A1 | 27-10-2011 |
| | | US 2013307925 A1 | 21-11-2013 |
| | | US 2014118490 A1 | 01-05-2014 |
| | | WO 2010076933 A1 | 08-07-2010 |
| WO 2013183947 A1 | 12-12-2013 | CN 104584547 A | 29-04-2015 |
| | | EP 2858363 A1 | 08-04-2015 |
| | | JP 2015524209 A | 20-08-2015 |
| | | KR 20150023329 A | 05-03-2015 |
| | | US 2015116455 A1 | 30-04-2015 |
| | | WO 2013183947 A1 | 12-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150012898